# EUROPÄISCHE PATENTSCHRIFT

(11) **EP 0 748 153 B1**
(45) Veröffentlichungstag und Bekanntmachung des Hinweises auf die Patenterteilung: **07.01.1999**
(21) Anmeldenummer: 95908197.7
(22) Anmeldetag: 16.02.1995
(51) Int. Cl.: A01B 63/114, A01D 41/14

(54) **VORRICHTUNG ZUR REGELUNG DES BODENABSTANDES EINER BEARBEITUNGSEINHEIT EINER LANDWIRTSCHAFTLICHEN MASCHINE**
DEVICE FOR REGULATING THE DISTANCE FROM THE GROUND OF A WORKING UNIT OF AN AGRICULTURAL MACHINE
DISPOSITIF PERMETTANT D'AJUSTER L'ECART PAR RAPPORT AU SOL DE L'UNITE DE TRAVAIL D'UNE MACHINE AGRICOLE

(30) Priorität: 03.03.1994 DE 4406892
(43) Veröffentlichungstag der Anmeldung: 18.12.1996
(73) Patentinhaber: ROBERT BOSCH GMBH, 70442 Stuttgart (DE)
(72) Erfinder: MAICHLE, Josef, D-71717 Beilstein (DE)
(86) Internationale Anmeldenummer: DE9500188
(87) Internationale Veröffentlichungsnummer: WO9523496

(56) Entgegenhaltungen:
- EP-A- 0 331 893

## Beschreibung

### Stand der Technik

Die Erfindung betrifft eine Vorrichtung zur Regelung des Bodenabstandes einer Bearbeitungseinheit einer landwirtschaftlichen Maschine nach der Gattung des Hauptanspruchs (siehe EP-A-331893).

Es ist bereits eine hydraulische Hubeinrichtung für Mähdrescher aus der DE-PS 15 82 161 bekannt, bei der die Lage der Bearbeitungseinheit relativ zum Mähdrescher und die in der hydraulischen Hubeinrichtung auftretenden Drücke meßtechnisch erfaßt werden. Über eine Summenregelung werden diese beiden Meßsignale kombiniert und ein Regelausgangsignal unter Berücksichtigung der Abweichung zu einem eingestellten Sollwert erzeugt. Da eine Regelung der Lage der Bearbeitungseinheit - hier ein Mähtisch, der Getreide in einer vorgegebenen Stoppelhöhe über dem Boden schneiden soll - aber nicht zwangsläufig auch zu einer guten Konstanthaltung der gewünschten Stopnelhöhe führt, ist diese Vorrichtung verbesserungsbedürftig.

Aus der DE-OS 32 40 751 ist darüberhinaus bekannt, zusätzlich zur Messung des Auflagedrucks eines Einzugsorgans einer Erntemaschine auch mittels eines mechanischen Tastorgans den Bodenabstand des Einzugsorgans zu messen. Jedoch werden bei dieser bekannten Einrichtung beide Größen separat eingestellt und auch ausgewertet, was beispielsweise bei großen Unebenheiten des Bodens, bzw. bei großer Bearbeitungsgeschwindigkeit zu Ungenauigkeiten in der Bearbeitung führen kann.

Ferner ist noch in der EP-PS O 070 354 eine Mischwerteinstellung bei Hubwerken von Landmaschinen bekannt, bei der zwar eine kombinierte Auswertung der verschiedenen Meßgrößen vorgenommen wird, jedoch wird diese Regelung insbesondere zur optimierten Kraftübertragung bei Pflugmaschinen eingesetzt, bei denen der Bodenabstand keine Bedeutung hat.

### Vorteile der Erfindung

Die erfindungsgemäße Vorrichtung zur Regelung des Bodenabstandes einer Bearbeitungseinheit einer landwirtschaftlichen Maschine mit den kennzeichnenden Merkmalen des Anspruchs 1 ist insofern vorteilhaft, als durch die Normierung von Einflußgrenzen der Sensoren im Regelgerät, innerhalb des jeweiligen Sollwerteinstellbereichs, eine optimale Auswertung der Sensorausgangssignale in ihren jeweils günstigsten Arbeitsbereichen vorgenommen werden kann. Besonders die hervorgehobene Auswertung des berührungsfrei in Bodennähe ermittelten Abstandssignals und der ab einer vorgegebenen Höhe gleitende Übergang in eine kombinierte Auswertung mit dem Lagesignal macht einerseits die Verwendung relativ empfindlicher Sensoren für den Nahbereich und andererseits eine stabile Regelung auch für größere Hübe der Bearbeitungseinheit möglich.

Mit den in den Unteransprüchen angegebenen Merkmalen kann in vorteilhafter Weise eine Justierung der Betriebsbedingungen sowie die Normierung für die regeltechnische Auswertung und die Einstellung von Sollwerten für die verschiedenen Betriebsarten vorgenommen werden. Auch eine aktive Schwingungsdämpfung, die den jeweiligen Einsatzbedingungen und der speziellen Konstruktion der Maschine angepaßt ist, führt zu einer weiteren Verbesserung der Vorrichtung. Durch die Kenntnis aller Rahmenbedingungen bei der Justierung können bei einem Ausfall des Bodenabstandsensors auch mit einer alleinigen Lageregelung noch befriedigende Ergebnisse erzielt werden.

Besonders gute Ergebnisse werden erzielt, wenn die Abstandsmessung mit mindestens einem Ultraschallsensor durchgeführt wird, da dieses Meßverfahren weitgehend unabhängig von Umgebungsbedingungen ist und in elektronisch aufgebauten Regelgeräten gut verarbeitet werden kann.

Mit der erfindungsgemäßen Vorrichtung nach Anspruch 7 kann in vorteilhafter Weise der Mähtisch eines Mähdreschers in einer vorgegebenen Sollhöhe (Stoppelhöhe) über dem Boden gehalten werden. Vom Bedienpersonal wird während eines Arbeitsintervalls lediglich die Einstellung der Stoppelhöhe an einem Stellglied vorgenommen; die unterschiedlich gewichtete Auswertung der Sensorsignale geschieht in dem vorzugsweise mit einem entsprechend programmierten Microcontroller ausgerüsteten Regelgerät, sodaß der Mähtisch während des Arbeitsintervalls quasi schwimmend über der Bodenkontur gleitet, da der gemessene Bodenabstand permanent zu einer Nachführung der unterschiedlichen Meßwertauswertungszonen führt.

### Zeichnung

Ein Ausführungsbeispiel wird der erfindungsgemäßen Vorrichtung wird anhand der Zeichnung erläutert. Es zeigen:
Figur 1 eine Skizze eines Mähdreschers mit einem bodenabstandsgeregelten Mähtisch;
Figur 2 ein Diagramm bezüglich der Arbeits- und Einflußbereiche der Sensoren am Mähdrescher;
Figur 3 ein Diagramm über eine Kombination der Arbeitsbereiche einer Lage- und Abstandsregelung;
Figur 4 ein Diagramm über eine Druckregelung.

### Beschreibung des Ausführungsbeispiels

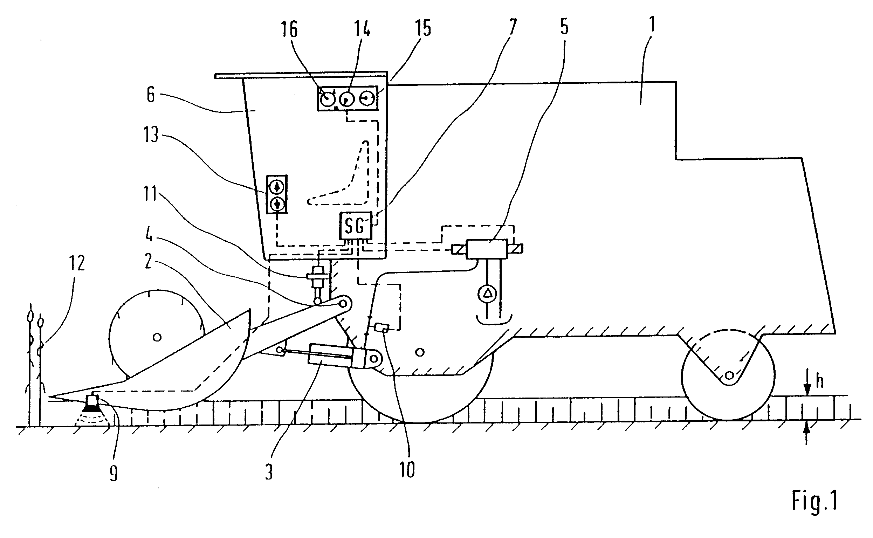

In der Figur 1 ist ein Mähdrescher 1 als landwirtschaftliche Maschine dargestellt, der einen Mähtisch 2 als Bearbeitungseinheit an seiner Vorderfront trägt. Der Mähtisch 2 ist über ein hydraulisches Steuerelement 3 in seiner Lage relativ zum Mähdrescher 1 um eine Drehachse 4 verstellbar. Ein Regelventil 5 versorgt das Steuerelement 3 mit der Hydraulikflüssigkeit zum Aufbau des zur geforderten Verstellung des Mähtisches 2 notwendigen Drucks. In einem Fahrerhaus 6 ist ein elektronisches Regelgerät 7 schematisch angedeutet, welches als Ausgangsgröße das Stellsignal für das Regelventil 5 erzeugt. Als Istgrößen werden dem Regelgerät 7 das Ausgangssignal eines Ultraschallsensors 9 ( wobei ein zweiter Ultraschallsensor am anderen Ende des Mähtisches 2 nicht sichtbar ist), das Ausgangssignal eines Drucksensors 10 und das Ausgangssignal eines beispielsweise induktiven Lagesensors 11 zugeführt.

Der Ultraschallsensor 9 erfaßt hierbei den Bodenabstand des Mähtisches 2, der mit der Stoppelhöhe h eines abgemähten Erntegutes 12 direkt korreliert; der Lagesensor 11 mißt die Lage des Mähtisches 2 relativ zum Mähdrescher 1, wobei diese Lage aufgrund von konstruktiven Gegebenheiten des Mähdreschers und/oder Bodenunebenheiten nicht direkt mit dem Bodenabstand korreliert. Der Drucksensor 10 erfaßt den Auflagedruck des Mähtisches 2 auf den Boden in der Ruhelage bzw. auf die Halterung an der Maschine. Das Drucksignal kann auch zur Erfassung und zur aktiven (geregelten) Dämpfung von Nickschwingungen des Mähtisches 2 herangezogen werden.

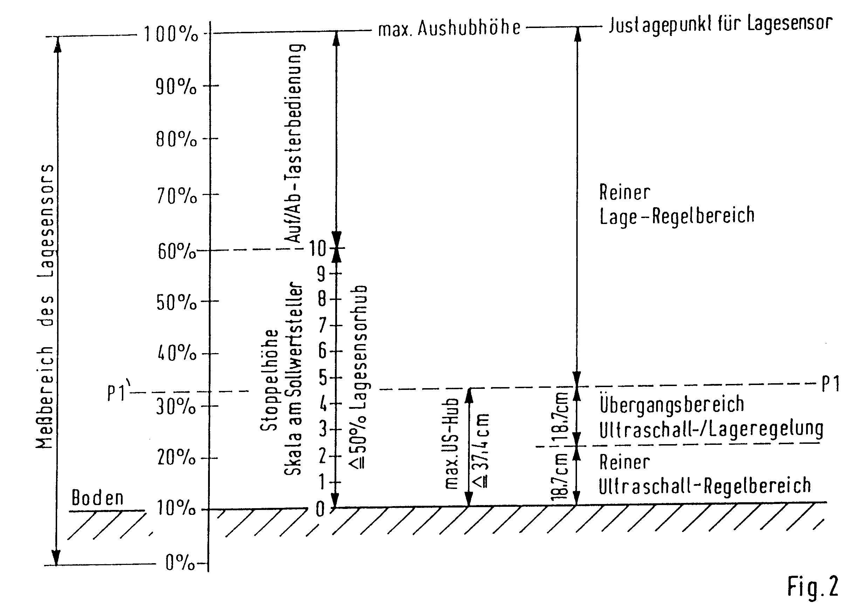

Als Sollgrößen stehen dem Regelgerät 7 die Ausgangssignale eines Bedientasters 13 zur zwangsweisen Auf- und Niederbewegung des Mähtisches 2, eines Sollwertstellers 14 für die Einstellung der der gewünschten Stoppelhöhe h und eines Sollwertstellers 15 für einen gewünschten Auflagedruck des Mähtisches 2 zur Verfügung. Darüberhinaus ist noch ein Betriebsartenwahlschalter 16 vorhanden, dessen Funktion sich aus den folgenden Erläuterungen zu den Figuren 2 bis 4 ergibt.

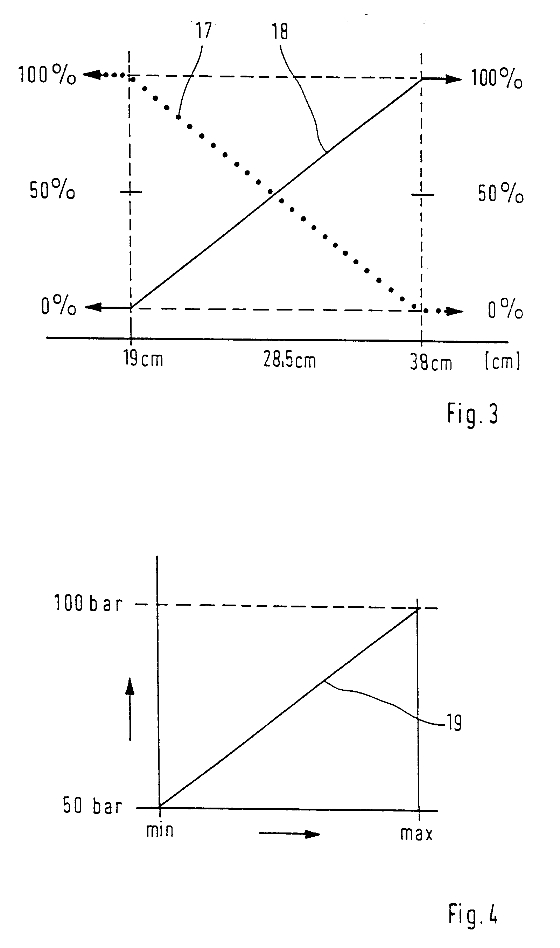

Anhand der Figur 2 wird die Funktion des hier dargestellten Ausführungsbeispiels erläutert, wobei auch auf die Figuren 3 und 4 Bezug genommen wird. In der linken Skala des Diagramms nach der Figur 2 ist der 100% Meßbereich des Lagesensors 11 dargestellt, der den gesamten Hubbereich des Mähtisches 2 erfaßt und darüberhinaus die Bodenbegrenzung bei beispielsweise 10% des Meßbereichs erfasst. Die zu jeweiligen Signal des Lagesensors 11 gehörenden Sollwerte werden in einem Justiervorgang normiert. Dabei wird dieses Signal so eingestellt, daß der gesamte Zylinderhub abgedeckt ist. Das entsprechende Signal bei Bodenauflage des Mähtisches 2 ist abhängig von seinen konstruktiven Gegebenheiten und wird beim Justiervorgang quasi erlernt. Beim hier dargestellten Ausführungsbeispiel wird ein Sollwerteinstellbereich von 10% bis 60% normiert; bei einem anders konstruierten Mähtisch 2 kann dieser Bereich beispielsweise 20% bis 70% betragen.

Darüberhinaus muß dem Regelgerät 7 durch Justierung das Signal des Lagesensors 11 bekannt sein, bei welchem der Ultraschallsensor 9 bei waagerecht stehendem Mähdrescher in seinen Meßbereich eintaucht (Gerade P1 bei 37,4 cm Bodenabstand in Figur 2) und bei welchem Signal der Mähtisch 2 auf dem Boden aufliegt. Die im Regelgerät 7 intern verwendeten Sollwerte für den Ultraschallsensor 9 werden entsprechend der so erfassten Signale festgelegt. Das Regelgerät 7 ist derart programmiert, daß ab der 60% Marke ( entspr. 50% des Meßbereichs des Lagesensors 11 über dem Boden) ein Übergang von einer Regelung des Bodenabstandes in eine reine Steuerung der Lage des Mähtisches 2 über die Bedientaster 13 erfolgt.

Im Bereich von 10% bis 60% des Meßbereichs des Lagesensors 11 ist beim beschriebenen Ausführungsbeispiel eine Regelung des Bodenabstandes auf einen mit dem Sollwertstellers 14 eingestellten Wert durchführbar. Dieser Bereich ist in drei Zonen aufgeteilt, wobei in der unteren, also bodennahen Zone, ausschließlich das Ausgangssignal des Ultraschallsensors 9 herangezogen wird. Diese Zone umfaßt etwa den halben Meßbereich des Ultraschallsensors von ca. 38 cm. In der darüberliegenden Zone von ebenfalls ca. 19 cm werden die Ausgangssignale vom Ultraschallsensor 9 und vom Lagesensor 11 kombiniert ausgewertet, und zwar in der in Figur 3 gezeigten linear sich überlappenden Weise. Die Gerade 17 zeigt den schwächer werdenden Einfluß des Ultraschallsensors 9 und die Gerade 18 den sich verstärkenden Einfluß des Lagesensors 11 in Abhängigkeit vom mit dem Ultraschallsensor 9 gemessenen Bodenabstand (hier 19 bis 38 cm).

In der dritten Zone, die bis an die 100% Marke des Regelbereichs des Lagesensors 11 heranreicht, findet eine reine Lageregelung mittels des Ausgangssignals des Lagesensors 11 statt. Der Einstellbereich des Sollwertstellers 14 ist im Diagramm nach der Figur 2 neben dem Meßbereich des Lagesensors 11 dargestellt und weist einen Skalenbereich von 0 bis 10 auf, wobei sich hier die Grenze des Meßbereichs des Ultraschallsensors 9 bei einem Skalenwert von 4,5 befindet.

Beim Betrieb des beschriebenen Mähdreschers 1 kann somit nach erfolgter Justierung ein über die Bedientaster 13 gesteuertes Absenken des Mähtisches 2 auf die mit dem Sollwertgeber 14 eingestellte Stoppelhöhe ruckfrei und proportional erfolgen, auch wenn die Ausgangsposition weit oberhalb des Meßbereichs des Ultraschallsensors liegt. Alle normierten Zuordnungszonen der Sensoren 9 und 11 für die Regelung (vgl. Fig. 2) werden quasi ruckfrei durchfahren, da das Regelgerät einen gleitenden Übergang gewährleistet. Eine Regelung des Bodenabstandes ausschließlich mittels des Lagesensors 11 wäre hierbei wegen der niederfrequenten Nickbewegung des Mähdreschers 1 während der Fahrt nicht brauchbar.

In der Figur 4 ist ein Diagramm über dem Verlauf des mit dem Drucksensor 10 erfaßtem Drucksignals 19. Der Minimaldruck bei Aufliegen des Mähtisches 2 auf dem Boden soll hier 50 bar und der Maximaldruck bei vollständig angehobenem Mähtisch 100 bar betragen. An der senkrechten Achse des Diagramms ist somit der in dem Justiervorgang normierte Drucksollwert angegeben und an der waagerechten Achse der Drehwinkel des Sollwertstellers 15 zwischen Minimal- und Maximalstellung. Auch dieser Justiervorgang für die Sollwerte läuft, wie bei den vorherbeschriebenen, weitgehend automatisiert ab.

Bei der Regelung des Auflagedrucks des Mähtisches 2 liegt dieser somit mit einer vorwahlbaren Restkraft auf dem Boden auf um Verschleiß und Reibkraft minimal zu halten; diese Restkraft wird weitgehend konstant gehalten, wobei davon ausgegangen wird, daß bei Anheben des Mähtisches 2 nach dem Ausführungsbeispiel ein höherer Druck als 50 bar erzeugt wird und unterhalb von 50 bar nicht mehr geregelt wird.

Darüberhinaus kann das Regelgerät 7 so ausgebildet sein, daß bei einer Betätigung des Bedientasters 13 die Druckregelung ausgeschaltet ist und ein Absenken oder Anheben proportional lagegeregelt in der oben beschriebenen Weise erfolge. Hierbei wird erst nach Stillstand der Bewegung die Druckregelung wieder aktiviert. Die Druckregelung mittels des Druckreglers 10, des hydraulischen Stellgliedes 3, des Regelventils 5 und des Regelgeräts 7 ermöglicht eine hervorragende Ausregelung von störenden Druckamplituden im Stellglied 3 bei der Arbeit und beim Transport des Mähdreschers 1, wodurch eventuell auftretende Nickschwingungen des Mähdreschers 1 verhindert werden.

## Patentansprüche

1. Vorrichtung zur Regelung des Bodenabstandes einer Bearbeitungseinheit einer landwirtschaftlichen Erntemaschine, insbesondere Mähdrescher, die einen Lagesensor (11), der die Lage der Bearbeitungseinheit (2) relativ zur Maschine erfaßt, sowie einen Drucksensor (10) aufweist, der die in einem vorzugsweise hydraulischen Steuerelement (3) auftretenden Drücke mißt und die ein Regelgerät (7) enthält, das unter Vorgabe mindestens eines Sollwertes und unter Auswertung der Sensorausgangssignale das Steuerelement (3) zur Einstellung des Bodenabstands betätigt und bei der ein Bodenabstandssensor (9) vorhanden ist, der berührungsfrei den Bodenabstand der Bearbeitungseinheit (2) mißt und ein entsprechendes Ausgangssignal an das Regelgerät (7) abgibt und die das Wegsignal des Lagesensors (11) allein oder in Verbindung mit dem Wegsignal des Bodenabstandssensors (9) auswertet, dadurch gekennzeichnet, daß das Regelgerät (7) so ausgebildet ist, daß es in jeweils vorgegebenen Grenzen das mit dem Lagesensor (11) und das mit dem Bodenabstandssensor (9) erfaßte Wegsignal jeweils einzeln oder kombiniert so auswertet, daß das Regelgerät (7) im bodennahen Bereich allein das Ausgangssignal des Bodenabstandssensors (9) als Istsignal zur Regelung heranzieht und in einem bodenfernen anschließenden Übergangsbereich dessen Einfluß verringert bei gleichzeitig zunehmendem Einfluß des Ausgangssignals des Lagesensors (11), und in einem darüberliegeden, bodenfernen Bereich allein das Ausgangssignal des Lagasensors (11) als Istsignal zur Regelung verwendet.

2. Vorrichtung nach Anspruch 1, dadurch gekennzeichnet, daß das Regelgerät (7) derart ausgebildet ist, daß die Sollwerteinstellbereiche und die jeweilige Zuordnung der Sensorausgangssignale für die jeweilige Konfiguration der landwirtschaftlichen Erntemaschine normierbar sind, wobei der Meßbereich des Bodenabstandssensors (9) eine Weglänge umfaßt, in deren bodennaher Hälfte ausschließlich das Ausgangssignal des Bodenabstandssensors (9) ausgewertet wird und in deren bodenferner Hälfte zusätzlich das Ausgangssignal des Lagesensors (11) in mit der Entfernung vom Boden steigender Tendenz herangezogen wird.

3. Vorrichtung nach Anspruch 1 oder 2, dadurch gekennzeichnet, daß das Regelgerät (7) drei Betriebsarten aufweist, wobei
- eine erste Betriebsart (Schnitthöhenregelung) die Regelung des Bodenabstandes auf einen über einen Sollwertsteller (14) vorgegebenen Abstandswert nach kontinuierlichem Absenken der Bearbeitungseinheit (2) mittels des Bedientasters (13),
- eine zweite Betriebsart (Ruhelage) die Regelung des Restauflagedrucks bei auf den Boden abgesenkter Bearbeitungseinheit (2) und eine
- dritte Betriebsart (Transport) die Einstellung einer festen Höhe der Bearbeitungseinheit (2) durch einen Bedientaster (13) darstellt.

4. Vorrichtung nach Anspruch 3, dadurch gekennzeichnet, daß das Regelgerät (7) derart ausgeführt ist, daß es in der ersten und in der dritten Betriebsart eine aktive Schwingungsdämpfung bezüglich der Bewegungen der Bearbeitungseinheit (2) durchführt.

5. Vorrichtung nach einem der vorhergehenden Ansprüche
**dadurch gekennzeichnet**, daß
- der Bodenabstandssensor (9) ein Ultraschallsensor mit einem vorgegebenen Meßbereich ist.

6. Vorrichtung nach Anspruch 5
**dadurch gekennzeichnet**, daß
- die landwirtschaftliche Maschine ein Mähdrescher (1) ist, der als Bearbeitungseinheit (2) einen Mähtisch (2) aufweist, wobei beim Mähtisch (2)
- an der unteren, dem Boden zugewandten Seite des Mähtisches (2) mindestens einer der Ultraschallsensoren (9) angebracht ist, der mit einem ersten Eingang des Regelgeräts (7) verbunden ist, daß
- über einen zweiten Eingang das Regelgerät (7) mit dem Ausgangssignal des Drucksensors (10) und über einen dritten Eingang mit dem Ausgangssignal des Lagesensors (11) als Istgrößen beaufschlagt wird, daß
- ein Regelventil (5) zur hydraulischen Lageverstellung des Mähtisches (2) vorhanden ist, das vom Ausgangssignal des Regelgeräts (7) angesteuert wird und daß
- als Stellglieder der Bedientaster (13) für eine erzwungene Höhenverstellung des Mähtisches (2), ein Wahlschalter (16) für die Betriebsarten, der Sollwertsteller (14) für den Bodenabstand und ein Sollwertsteller (15) für die Druckkraft der Hydraulik (3) mit dem Regelgerät (7) verbunden sind.

7. Vorrichtung nach einem der vorgehenden Ansprüche
**dadurch gekennzeichnet**, daß
- vor einem Arbeitsintervall, nach einer Konfigurierung der landwirtschaftlichen Maschine (1) eine Justierung durch eine Betätigung der Bearbeitungseinheit (2) durchführbar ist, bei der
- das Wegsignal des Lagesensors (11) beim Eintauchen des Bodenabstandssensors (9) in seinen Meßbereich,
- das-Wegsignal des Lagesensors (11) beim Aufliegen der Bearbeitungseinheit (2) auf dem Boden und
- das Ausgangssignal des Drucksensors (10) bei vollständigem Anheben der Bearbeitungseinheit (2) in einem nichtflüchtigen Speicher des einen Microcontroller aufweisenden Regelgeräts (7) hinterlegbar ist.

8. Vorrichtung nach Anspruch 7
**dadurch gekennzeichnet**, daß
- die Justierung der den ermittelten Sensorsignalen entsprechenden Sollwerte im Regelgerät (7) programmgesteuert durchführbar ist.

## Claims

1. Device for regulating the ground clearance of a working unit of an agricultural harvesting machine, in particular a combine harvester, which device has a position sensor (11) which records the position of the working unit (2) relative to the machine, and a pressure sensor (10) which measures the pressures occurring in a preferably hydraulic control element (3), and which device contains a control unit (7) which, with the specification of at least one reference value and with evaluation of the sensor output signals, actuates the control element (3) to set the ground clearance, and in which device there is a ground-clearance sensor (9) which, without contact, measures the ground clearance of the working unit (2) and emits an appropriate output signal to the control unit (7), and which device evaluates the distance signal of the position sensor (11) alone or in conjunction with the distance signal of the ground-clearance sensor (9), characterized in that the control unit (7) is configured in such a way that, within given limits respectively, it evaluates the distance signal recorded by the position sensor (11) and the distance signal recorded by the ground-clearance sensor (9) in each case singly or in combination in such a way that, in the region near to the ground, the control unit (7) applies only the output signal of the ground-clearance sensor (9) as actual signal for regulation and, in an adjoining transition region remote from the ground, it reduces the influence of the said output signal with a simultaneously increasing influence of the output signal of the position sensor (11) and, in a region located above, remote from the ground, it uses only the output signal of the position sensor (11) as actual signal.

2. Device according to Claim 1, characterized in that the control unit (7) is configured in such a way that the setting ranges for the reference value and the respective allocation of the sensor output signals can be standardized for the respective configuration of the agricultural harvesting machine, the measurement range of the ground-clearance sensor (9) comprising a distance in length in which, in its half near to the ground, solely the output signal of the ground-clearance sensor (9) is evaluated and, in its half remote from the ground, additionally the output signal of the position sensor (11) is applied in a tendency increasing with the distance from the ground.

3. Device according to Claim 1 or 2, characterized in that the control unit (7) has three operating modes,
- a first operating mode (cutting-height regulation) constituting the regulation of the ground clearance to a clearance value which is predetermined by means of a reference-value setter (14) after continuously lowering the working unit (2) by means of the operating button (13),
- a second operating mode (at rest position) constituting the regulation of the residual resting pressure with the working unit (2) lowered onto the ground, and
- a third operating mode (transport) constituting the setting of a fixed height of the working unit (2) by means of an operating button (13).

4. Device according to Claim 3, characterized in that the control unit (7) is designed in such a way that it performs active vibration damping in respect of the movements of the working unit (2) in the first and in the third operating modes.

5. Device according to one of the preceding claims, characterized in that
- the ground-clearance sensor (9) is an ultrasonic sensor with a given measurement range.

6. Device according to Claim 5, characterized in that
- the agricultural machine is a combine harvester (1) which has a cutter deck (2) as working unit (2), in the cutter deck (2)
- at least one of the ultrasonic sensors (9) being mounted on the underside of the cutter deck (2) facing the ground and being connected to a first input of the control unit (7), in that
- the control unit (7) is loaded with the output signal of the pressure sensor (10) via a second input and with the output signal of the position sensor (11) via a third input as actual variables, in that
- a control valve (5) is present for the hydraulic positional adjustment of the cutter deck (2), which control valve is actuated by the output signal of the control unit (7), and in that
- as regulators, the operating button (13) for an enforced height-adjustment of the cutter deck (2), a selector switch (16) for the operating modes, the reference-value setter (14) for the ground clearance and a reference-value setter (15) for the compressive force of the hydraulic system (3) are connected to the control unit (7).

7. Device according to one of the preceding claims, characterized in that
- according to one configuration of the agricultural machine (1), an adjustment can be carried out prior to an interval in the work by actuating the working unit (2), in which storage of
- the distance signal of the position sensor (11) when the ground-clearance sensor (9) enters its measurement range,
- the distance signal of the position sensor (11) when the working unit (2) rests on the ground and
- the output signal of the pressure sensor (10), when the working unit (2) has been raised completely, is possible in a nonvolatile memory of the control unit (7), which has a microcontroller.

8. Device according to Claim 7, characterized in that
- the adjustment of the reference values corresponding to the sensor signals determined can be carried out in the control unit (7) under program control.

## Revendications

1. Dispositif de régulation de la garde au sol (écart au sol) d'une unité de travail d'une machine de récolte agricole, notamment d'une moissonneuse-batteuse comportant
- un capteur de position (11) qui détecte la position de l'unité de travail (2) par rapport à la machine ainsi qu'un capteur de pression (10) qui mesure les pressions de préférence dans un élément de commande hydraulique (3) et comporte un appareil de régulation (7) qui en prédéterminant au moins une valeur de consigne et en exploitant les signaux de sortie de capteur, actionne l'élément de commande (3) pour régler la garde au sol,
- ainsi qu'un capteur de garde au sol (9) qui mesure sans contact la garde au sol de l'unité de travail (2) et fournit un signal de sortie correspondant à l'appareil de régulation (7) et exploite le signal de la course du capteur de position (11), unique ou en combinaison avec le signal de course du capteur de garde au sol (9),
caractérisé en ce que
l'appareil de régulation (7) est réalisé pour que dans des limites respectives, prédéterminées, le signal de course capté par le capteur de position (11) et celui du capteur de garde au sol (9) sont exploités chaque fois séparément ou en combinaison,
- l'appareil de régulation (7) utilise uniquement le signal de sortie du capteur de garde au sol (9) comme signal réel de régulation et,
- dans une plage de transition adjacente, plus éloignée du sol, on diminue son influence et on augmente simultanément l'influence du signal de sortie du capteur de position (11),
- et dans une plage éloignée du sol, qui se trouve au-dessus, on utilise uniquement le signal de sortie du capteur de position (11) comme signal réel pour la régulation.

2. Dispositif selon la revendication 1,
caractérisé en ce que
- l'appareil de régulation (7) est réalisé de façon que les plages de réglage des valeurs de consigne et l'association respective des signaux de sortie des capteurs pour la configuration respective de la machine agricole sont normalisées,
- la plage de mesure du capteur de garde au sol (9) comprend une longueur de course et pour la moitié de cette longueur de course, proche du sol, uniquement le signal fourni par le capteur de garde au sol (9) est exploité alors que dans la moitié éloignée du sol, on utilise en outre le signal du capteur de position (11) selon une fonction croissante avec l'éloignement par rapport au sol.

3. Dispositif selon les revendications 1 ou 2,
caractérisé en ce que
l'appareil de régulation (7) présente trois modes de fonctionnement,
- un premier mode de fonctionnement (régulation de la hauteur de coupe) selon lequel la régulation concerne la garde au sol régulée sur une valeur de garde au sol prédéterminée par un générateur de valeurs de consigne (14), après abaissement continu de l'unité de travail (2) à l'aide du clavier de l'opérateur (13),
- un second mode de fonctionnement (position de repos) pour la régulation de la pression d'appui au repos de l'unité de travail (2) abaissée sur le sol et,
- un troisième mode de fonctionnement (transport) réglant une hauteur fixe pour l'unité de travail (2) par le clavier de l'opérateur (13).

4. Dispositif selon la revendication 3,
caractérisé en ce que
l'appareil de régulation (7) est conçu pour que dans le premier et le troisième mode de fonctionnement, il exécute un amortissement actif des oscillations par rapport aux mouvements de l'unité de travail (2).

5. Dispositif selon l'une quelconque des revendications précédentes,
caractérisé en ce que
le capteur de garde au sol (9) est un capteur à ultrasons avec une plage de mesure prédéterminée.

6. Dispositif selon la revendication 5,
caractérisé en ce que
- la machine agricole est une moissonneuse-batteuse (1) comportant comme unité de travail (2) une barre de fauche (2) et, pour la barre de fauche (2),
- du côté de la barre de fauche (2) inférieure, tournée vers le sol, il y a au moins l'un des capteurs à ultrasons (9) relié à la première entrée de l'appareil régulateur (7) et,
- une seconde entrée de l'appareil de régulation (7) reçoit le signal de sortie du capteur de pression (10) et une troisième entrée reçoit le signal de sortie du capteur de position (11) comme grandeur réelle,
- un distributeur de régulation (5) assurant le réglage hydraulique de la position de la barre de fauche (2), ce distributeur étant commandé par le signal de sortie de l'appareil de régulation (7) et,
- comme actionneur, le clavier de commande (13) pour un réglage de hauteur forcée de la barre de fauche (2), un sélecteur (16) pour les modes de fonctionnement, le générateur de valeurs de consigne (14) pour la garde au sol et un générateur de valeurs de consigne (15) pour la pression dans l'hydraulique (3) sont reliés à l'appareil de régulation (7).

7. Dispositif selon l'une quelconque des revendications précédentes,
caractérisé en ce qu'
- avant l'intervalle de travail, après une configuration de la machine agricole (1), on effectue un ajustage en actionnant l'unité de travail (2), selon lequel
- le signal de course du capteur de position (11) lorsque le capteur de garde au sol (9) arrive dans sa plage de mesure,
- le signal de course du capteur de position (11) lorsque l'unité de travail (2) repose sur le sol et,
- le signal de sortie du capteur de pression (10) lorsque l'unité de travail (2) est complètement soulevée,
sont enregistrés dans une mémoire fixe de l'appareil de régulation (7) comprenant un micro-ordinateur.

8. Dispositif selon la revendication 7,
caractérisé en ce que
l'ajustage des valeurs de consigne correspondant aux signaux de capteur obtenus est effectué par commande par programme dans l'appareil de régulation (7).
